# EUROPEAN PATENT APPLICATION

(11) **EP 4 692 626 A2**
(43) Date of publication of application: **11.02.2026**
(21) Application number: 25223519.7
(22) Date of filing: 04.10.2021
(51) Int. Cl.: F16L 43/00

(54) **FIRE PROTECTION SYSTEM PIPE FITTINGS**

(30) Priority: 30.10.2020 US 202063108104 P
(62) Divisional of application: 21885444.6
(71) Applicant: IPEX USA LLC, Pineville, NC 28134 (US)
(72) Inventor: SHIELDS, Steven Lee, Lubbock, Texas, 79407 (US); MILLER, Lyle, Milford, Connecticut, 06460 (US); RUCKER, William K., Providence, Rhode Island, 02903 (US); PRESSNELL, Kevin W., Athens, Alabama, 35613 (US)
(74) Representative: Meissner Bolte Nürnberg

(57) **Abstract**

A fire protection system can include one or more pipes coupled with a fluid source, a pipe fitting coupled with the one or more pipes downstream of the fluid source, and at least one sprinkler coupled with the one or more pipes and the pipe fitting. The pipe fitting can include a wall defining an opening, the wall having an outer diameter, a first wall thickness at the opening, and a second wall thickness inward from the opening, the second wall thickness greater than the first wall thickness. The at least one sprinkler can be coupled with the one or more pipes and the pipe fitting to receive fluid from the fluid source through the one or more pipes and the pipe fitting.

## Description

### CROSS-REFERENCE TO RELATED APPLICATIONS

The present application claims the benefit of priority to U.S. Provisional Application No. 63/108,104, filed October 30, 2020, the disclosure of which is incorporated herein by reference in its entirety.

### BACKGROUND

Fire protection sprinkler systems can include or be connected with pipes that deliver fluid to sprinklers, which can output the fluid responsive to a fire condition to address the fire condition. Pipe fittings can be used to connect pipes in the system to ensure proper delivery of the fluid.

### SUMMARY

At least one aspect relates to a fire protection system. The fire protection system can include one or more pipes coupled with a fluid source, a pipe fitting coupled with the one or more pipes downstream of the fluid source, and at least one sprinkler coupled with the one or more pipes and the pipe fitting. The pipe fitting can include a wall defining an opening, the wall having an outer diameter, a first wall thickness at the opening, and a second wall thickness inward from the opening, the second wall thickness greater than the first wall thickness. The at least one sprinkler can be coupled with the one or more pipes and the pipe fitting to receive fluid from the fluid source through the one or more pipes and the pipe fitting.

At least one aspect relates to a pipe fitting of a fire protection system. The pipe fitting can include a wall defining an opening, the wall having an outer diameter, a first wall thickness at the opening, and a second wall thickness inward from the opening, the second wall thickness greater than the first wall thickness, the opening receives a pipe to connect the pipe with the pipe fitting.

At least one aspect relates to a pipe fitting. The pipe fitting can include a wall made from a plastic material. The wall can define a first opening and a second opening spaced from the first opening to form at least one channel between the first opening and the second opening. The wall can include a knit line extending from the first opening to the second opening.

At least one aspect relates to a pipe fitting. The pipe fitting can include a plurality of openings and a knit line formed by injection molding. The knit line can extend from a first opening of the plurality of openings to a second opening of the plurality of openings. The knit line can be at least one of (i) thicker than an adjacent portion of the pipe fitting and (ii) at a first location on the pipe fitting expected to subjected to a relatively lower stress due to pressure from fluid in the pipe fitting compared with a second location on the pipe fitting spaced from the first location.

At least one aspect relates to a fire protection system including one or more pipes and a pipe fitting coupled with the one or more pipes between a fluid source and at least one sprinkler. The pipe fitting can include a wall made from a plastic material. The wall can define a first opening and a second opening spaced from the first opening to form at least one channel between the first opening and the second opening. The wall can include a knit line extending from the first opening to the second opening.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification.

A pipe fitting according to the invention is defined in claim 1. A fire protections system comprising a pipe fitting according to the invention is defined in claim 10.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing. In the drawings:
FIG. 1 is a schematic diagram of a fire protection sprinkler system.
FIG. 2 is a schematic diagram of a pipe fitting and a pipe of a fire protection sprinkler system.
FIG. 3 is a front view of an elbow pipe fitting.
FIG. 4 is a perspective view of an elbow pipe fitting.
FIG. 5 is a perspective view of an elbow pipe fitting.
FIG. 6 is a front view of a tee pipe fitting.
FIG. 7 is a perspective view of a tee pipe fitting.
FIG. 8 is a perspective view of a tee pipe fitting.
FIG. 9 is a front view of an elbow pipe fitting having a knit line of increased wall thickness.
FIG. 10 is a side section view of an elbow pipe fitting having a knit line of increased wall thickness.
FIG. 11 is a perspective section view of an elbow fitting having a knit line of increased wall thickness.

### DETAILED DESCRIPTION

Following below are more detailed descriptions of various concepts related to, and implementations of sprinkler system pipe fittings, assemblies, systems, and methods. Pipe fittings for fire sprinkler systems can be used to connect the pipes between a fluid source and the sprinklers, allowing for the fluid to be delivered to target locations with proper pressure. The various concepts introduced above and discussed in greater detail below can be implemented in any of numerous ways.

Sprinklers of fire protection systems can be installed in various locations, such as buildings, in which fluid is outputted by sprinklers to address fire conditions. The sprinklers can receive fluid from a fluid source through one or more pipes, such as chlorinated polyvinyl chloride (CPVC) pipes. Pipe fittings can connect the one or more pipes with one another so that fluid can be delivered from the fluid source to the locations of the sprinklers, including but not limited to sprinklers in residential fire protection systems such as for low-rise, one and two family dwelling, and manufactured homes.

In various such fire protection systems, the pipe fittings can be assembled to the pipes using a solvent-cement (e.g., to perform chemical welding). Some pipe fittings are designed to comply with ASTM specifications, such as ASTM sizing specifications for pipe fittings. For example, pipe fittings can be designed to comply with the ASTM F438 Standard Specification for Socket-Type CPVC Plastic Pipe fittings, Schedule 40 (e.g., Schedule 40 iron pipe size (IPS)) or ASTM F439 Standard Specification for Socket-Type CPVC Plastic Pipe Fittings, Schedule 80 (e.g., Schedule 80 iron pipe size (IPS)). For example, various such pipe fittings can have socket geometries and sizes, such as inner diameters, sized to receive the corresponding CPVC pipes (which can be attached using the solvent-cement). For example, the pipe fitting can have dimensions such as fitting wall thickness at the entrance of the socket (e.g., dimension E) that is matched to the pipe size (e.g., same minimum value) of the pipe wall thickness to be connected with the fitting, as well as the thickness of the pass through section between sockets (e.g., dimension F), which can be specified to be 125 percent of dimension E.

The sizing of the pipe fittings can be made to ensure that the pipe fittings can properly deliver fluid to the sprinklers that receive fluid through the fittings (including any change of direction provided by the fittings) with sufficient strength and reliability for fire protection operations. For example, the pipe fittings can be sized to withstand sufficient pressure (e.g., hydrostatic strength) to allow for fluid to be delivered responsive to the sprinklers opening in response to a fire condition.

Pipe fittings in accordance with the present disclosure can have hydrostatic strength for fire protection operations with reduced material usage, such as by increasing inner diameters, which can enable less pressure loss during flow and better hydraulic performance (which can have a secondary effect of reducing system pressure at the fluid source and/or pipe size needed to deliver the fluid to the sprinklers with sufficient pressure at the sprinklers); more compact fittings; and more efficient manufacturing, shipping, and storage. In addition, pipe fittings in accordance with the present disclosure can be manufactured (e.g., injection molded) in a manner that reduces material usage (as well as cycle times for the molding process) by arranging gates for molding the fittings in a manner that adjusts the positioning of knit lines formed in the pipe fittings so that relatively less strength is required at the location of the knit line while still achieving target strength values (e.g., burst pressure) for the pipe fitting.

For example, by making the pipe fittings more compact, they can be easier to install, such as for confined spaces; and can be positioned further away from an exterior wall, enabling greater use of insulation around the pipe fittings and connected pipes to improve resistance to freezing in installations that may be exposed to freezing temperatures. For example, the pipe fittings can have various dimensions as further described herein that can conform with SDR pipe (standard thermoplastic pipe dimension ratio pipe), such as SDR 13.5 pipe (e.g., outer diameter is 13.5 times wall thickness), which can withstand a minimum burst pressure of 1000 psi with a 1 inch size (e.g., compared to 1440 psi for a 1 inch Schedule 40 pipe). Pipe fittings in accordance with the present disclosure can withstand the minimum burst pressure of SDR 13.5 pipe while being able to be listed by fire protection governing agencies for use for protection (e.g., National Fire Protection Association (NFPA) 13 Standard for the Installation of Sprinklers Systems Fire; Underwriters Laboratories (UL); Factory Mutual (FM); National Sanitation Foundation (NSF)). The pipe fittings are capable of being certified according to ASTM F1970 Standard Specification for Special Engineered Fittings, Appurtenances, or Valves for use in Poly (Vinyl Chloride) (PVC) or Chlorinated Poly (Vinyl Chloride) CPVC Systems.

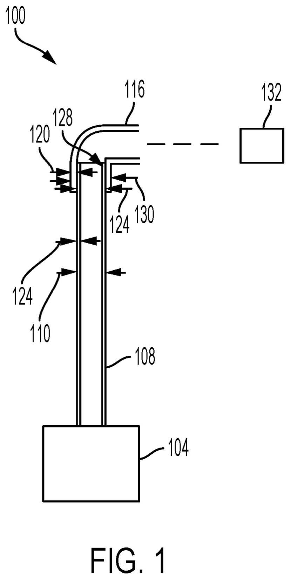

FIG. 1 depicts an example of a sprinkler system 100. The sprinkler system 100 can be implemented as a dry sprinkler system. The sprinkler system 100 can include a fluid supply 104. The fluid supply 104 can store fluids to be used to address a fire condition, which can include at least one of water and one or more fire suppression agents.

The sprinkler system 100 can include one or more pipes 108. The pipes 108 can be connected with the fluid supply 104 and extend from the fluid supply 104. The pipes 108 can extend through a structure, such as a building. Fluid from the fluid supply 104 can be present in the pipes 108 and flow through the pipes 108. The pipes 108 can include any of a variety of conduits that can be used to flow fluid, including but not limited to: piping, tubing, metal pipes, rigid pipes, or polymeric (e.g., chlorinated polyvinyl chloride (CPVC)) pipes. The pipes 108 can include thermoplastic pipes.

The pipes 108 can be SDR 13.5 pipes, having an outer diameter 110 that is 13.5 times a wall thickness 112 of the pipes 108. For example, the pipes 108 be 1 inch (e.g., nominal 1 inch) pipes.

The sprinkler system 100 can include at least one pipe fitting 116 that connect with the pipes 108. The pipe fittings 116 can define a wall thickness 120 and an inner diameter 124 (e.g., of a socket 128). The pipe fitting 116 can be sized to receive the pipes 108 in the socket 128. For example, the inner diameter 124 can be greater than the outer diameter 110 by less than a threshold, such that the inner diameter 124 can contact the outer diameter 110 (or be close enough to allow for the solvent cement to bond the inner diameter 124 with the outer diameter 110). The pipe fittings 116 can include various types of pipe fittings, including but not limited to: tees, reducing tees, elbows (e.g., 22.5 degree, 45 degree, 90 degree), reducing elbows, couplings, reducing couplings, caps, crosses, reducing crosses, bushings, reducing bushings, grooved coupling adapters, threaded adapters, and sprinkler head adapters. The pipe fittings 116 can be used with pipes 108 of various sizes (e.g. nominal sizes) used for fire protection applications, including but not limited to: 3/4 inch, 1 inch, 1.5 inch, 2 inch, 2.5 inch, and 3 inch pipes 108.

The pipe fitting 116 can have various dimensions consistent with those for various standards, such as the Schedule 40 or Schedule 80 standards, enabling proper geometry for connecting with the pipes 108 (e.g., dimension A, dimension B, dimension C) and laying-length dimensions (e.g., dimension G, dimension J, dimension N) while also allowing for the hydraulic performance improvements (e.g., less pressure drop, such as pressure drop as a function of effective hydraulic length compared to a Schedule 40 or Schedule 80 pipe fitting for use with the same size pipe 108). The pipe fitting 116 can have the same socket geometry as Schedule 40 or Schedule 80 pipe fittings (to receive pipe sizes such as SDR 13.), with a decreased outer diameter 130, enabling a more compact fitting while still being useable for fire protection applications.

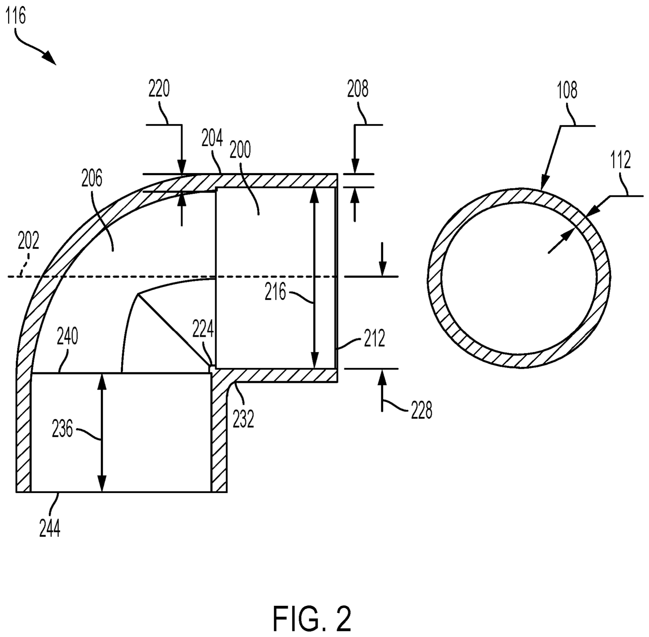

By sizing the pipe fitting 116 to directly correspond with the specific type of pipe 108 that is being used with the pipe fitting 116, including SDR-13.5 pipes, the pipe fitting 116 can have improved hydraulic flow performance while reducing material usage and maintaining fire protection performance. For example, the wall thickness 112 of the pipe 108 can be used as a basis for defining the wall thicknesses 208, 220 of the pipe fitting 116 (see FIG. 2). The ratio of the wall thickness 112 of the pipe 108 to the wall thicknesses 208, 220 of the pipe fitting can be determined by what is sufficient such that the hydrostatic strength of the pipe fitting 166 equals that of the pipe 108. This can result in improved flow performance, due to minimizing pressure drop, by maximizing the cross sectional area of the pass through section 206 of the fitting 116.

For example, the wall thickness 208 (see FIG. 2) can define the dimension E to be 0.078 inches and the wall thickness 220 can define the dimension F to be 0.098 inches for a nominal 3/4 inch pipe SDR-13.5 pipe 108 (e.g., as compared to 0.113 inches and 0.141 inches, respectively for Schedule 40 pipe for the same nominal pipe size, enabling a size reduction of over thirty percent while allowing for improved hydraulic performance and satisfying hydrostatic strength thresholds). Table 1 below outlines dimension E and dimension F values of the wall thicknesses 208, 220 of the pipe fitting 116.

**Table 1.**

| Nominal Size (inches) | Wall Thickness of Pipe 108 (inches) | Dimension E of Pipe fitting 116/wall thickness 208 (inches) | Dimension F of Pipe Fitting 116/wall thickness 220 (inches) |
|---|---|---|---|
| 3/4 | 0.078 | 0.078 | 0.098 |
| 1 | 0.097 | 0.097 | 0.121 |
| 1 1/4 | 0.123 | 0.123 | 0.154 |
| 1 1/2 | 0.141 | 0.141 | 0.176 |
| 2 | 0.176 | 0.176 | 0.220 |
| 2 1/2 | 0.213 | 0.213 | 0.266 |
| 3 | 0.259 | 0.259 | 0.324 |

As depicted in FIG. 1, the one or more pipes 108 can be connected, using the pipe fitting 116, to at least one sprinkler 132. The sprinkler 132 can output fluid received from the fluid supply 104 through the one or more pipes 108. For example, the sprinkler 132 can include a thermally responsive trigger (e.g., glass bulb; strut, link, and lever assembly) that opens a seal of the sprinkler 132 responsive to a threshold temperature or rate of rise of temperature indicative of a fire condition, or can include an open nozzle coupled with a valve that is caused to open responsive to the threshold temperature or rate of rise of temperature. The sprinkler 132 can be an electronic sprinkler that includes or is coupled with an actuator that operates responsive to the threshold temperature or the rate of rise of temperature to operate the sprinkler (e.g., trigger thermally responsive element).

FIG. 2 depicts an example of the pipe fitting 116 and the pipe 108. The pipe fitting 116 is depicted as a 90 degree elbow having a nominal size of 1 inch. The pipe fitting 116 includes a socket 200 (e.g., inlet or outlet to be connected with pipe 108). The socket 200 is defined by a wall 204, which has a first wall thickness 208. The first wall thickness 208 can be the dimension E of the pipe fitting 116.

The socket 200 has an opening 212 defined by an inner diameter 216 of the socket 200. The thickness of the wall 204 can increase from the first wall thickness 208 to a second wall thickness 220 inward from the opening 212. The second wall thickness 220 can define a pass-through section 206 inward from the socket 200. The pass-through section 206 can have the same outer diameter or a different outer diameter than the socket 200.

The opening 212 can have a radiused edge at the end of the wall 204. The dimension E can be defined based on an intersection (e.g., perpendicular intersection) of a tangent to the inner diameter 216 and a tangent to the end of the wall 204.

The second wall thickness 220 can be the dimension F of the pipe fitting 116. For example, the second wall thickness 220 can be a percentage of (e.g., 125 percent of) the first wall thickness 208 (in the example depicted in FIG. 2, the pipe fitting 116 is a nominal 1 inch size pipe fitting having the first wall thickness 208 of 0.097 inches and the second wall thickness 220 of 0.121 inches). As such, at least one of the socket 200 and the pass-through section 206 can be sized to enable improved hydraulic performance by reducing pressure loss due to relatively greater cross-sectional area.

The elbow pipe fitting 116 can define an extension 224, which can result from the intersection of the wall 204 in the socket portions (e.g., socket 200) and the pass-through section 206, where the wall 204 can be stepped inward. The extension 224 can extend into the socket 200 from the wall 204 where the wall 204 changes direction to form the elbow (e.g., from elbow point 232). The extension 224 can define a laying length 228 (e.g., dimension G) from a midpoint axis 202 of the socket 200 to the extension 224. The extension 224 can be sized to facilitate the hydraulic performance of the pipe fitting 116. For example, the laying length 228 can be 0.688 inches (for the 1 inch nominal pipe size of the elbow pipe fitting 116).

As noted above, the pipe fitting 116 can include dimensions that correspond with Schedule 40 or Schedule 80 standards. For example, the pipe fitting 116 can define a distance 236 (e.g., dimension C) from a shoulder 240 (e.g., a shoulder formed from the change in inner diameter from the pass-through section 206) parallel to the midpoint axis 202 and extending adjacent to the extension 224 (e.g., on an opposite side of the extension 224 from the socket 200) to an opening 244 of the pipe fitting 116. The distance 236 can be 0.875 inches. The distance 236 can be equal to a dimension C of a Schedule 40 fitting. The portion of the pipe fitting 116 defining the distance 236 can be tapered.

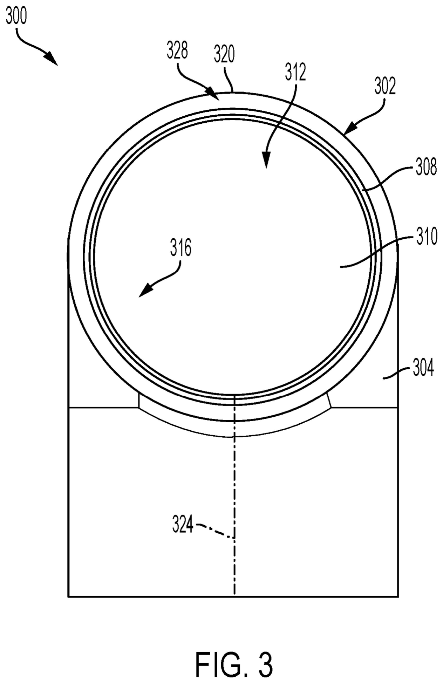

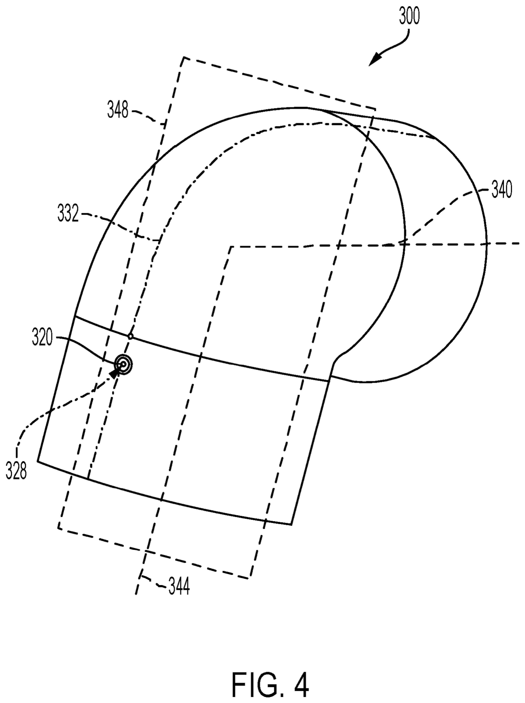

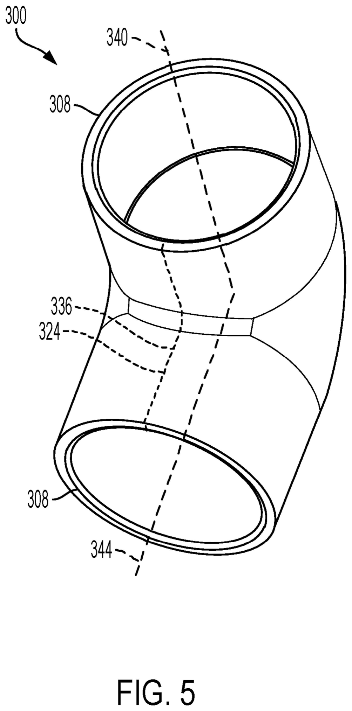

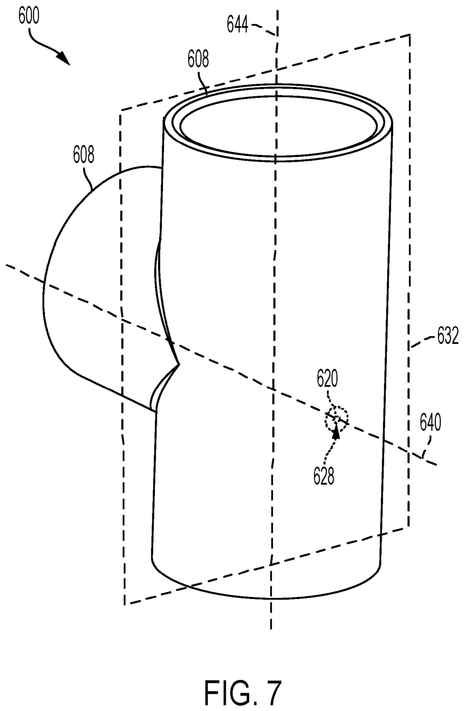

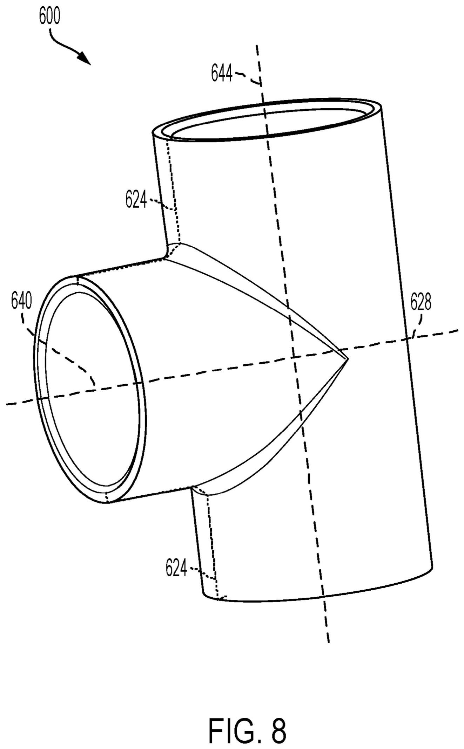

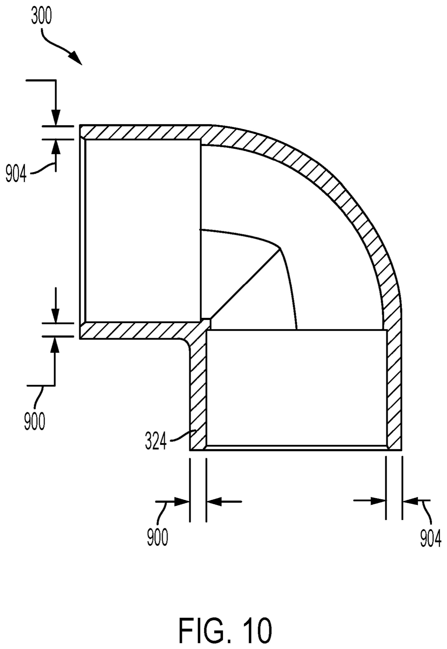

FIGS. 3-11 depict examples of pipe fittings that can be manufactured by injection molding in a manner that allows for reduced overall material usage by selectively positioning one or more gates by which material is provided to the mold in order to selectively positioning one or more knit lines formed during the molding process, including positioning the knit lines at locations expected to be exposed to relatively lesser forces or stresses from pressure of fluid in the pipe fitting, reducing or avoiding the need for increased wall thicknesses (e.g., increasing the wall thickness of significant portions of the pipe fitting, such as the majority or entirety of the pipe fitting) that may otherwise be required to prevent the pipe fitting from bursting at a pressure less than a target pressure rating for the pipe fitting.

Pipe fittings, such as plastic injection molded pipe fittings, can be manufactured by injection molding. The injection molding can include providing (e.g., flowing) a material into a mold, such as into a cavity of a mold, through one or more gates. The gate can be a hole in the mold fluidly coupling an exterior of the mold with the cavity. The mold can include or be provided with tooling such as a core around which the material flows (such that the core operates as a positive feature of the tooling allowing for a negative feature, such as a void or channel, to be defined in the pipe fitting being formed by the injection molding, as compared with the cavity, which can be a negative feature of the tooling allowing for a positive feature of the pipe fitting to be formed by the material filling the cavity). The material can be a plastic or other polymeric material, such as thermoplastics, CPVC, polyamides, materials including fibers or reinforced fibers, such as glass-filled polyamide (e.g., nylon materials), among various other polymeric materials or combinations thereof.

A knit line (e.g., weld line) can be formed in the pipe fitting due to the injection molding, such as when two flow fronts of material go around the core and then join together, such as by the molten material flowing through the gate, being divided (e.g., approximately equally) as it goes around the core, then rejoining on the other side. For example, a knit line can be formed at a location about opposite from a gate through which material enters the mold and goes around the core as two flow fronts that then meet to form the knit line. For pipe fittings, for example, the material can go around the core(s) that establish the internal voids of the pipe fittings for features such as pipe connection sockets and the transition section that joins the sockets. A knit line can be a relatively weaker portion of the pipe fitting because the flow fronts, being furthest in position (and time) from injection, can be cooler than a remainder of the material flows and surrounding plastic, such that the molecular chains are not able to commingle and form in a homogeneous mix. For example, for a given wall thickness, the knit line of an injection molded CPVC fitting may have a strength no greater than ninety percent of the strength of the remainder of the pipe fitting. As another example, knit lines for fittings using material with reinforced fibers can be even weaker as the fibers may not be able to penetrate and bridge the knit line.

Pipe fittings can be subjected to pressurized fluid during testing (e.g., burst pressure testing in which fluid of increasing pressure is applied to the pipe fitting until the pipe fitting bursts) as well as operational conditions. Due to the geometry of the pipe fittings, stresses on the structure of the pipe fittings may vary depending on position when subjected to the pressure of the fluid, such that certain portions of the pipe fittings can rupture at lower pressures than others given a particular wall thickness. Due to various such considerations as well as the relatively lower strength of the knit lines as discussed above, a target pressure rating (e.g., a pressure at or above which the pipe fitting can be expected to burst) of the pipe fitting may be relatively lower than might otherwise be expected given the wall thickness of the pipe fitting. For example, fittings may be tooled with regard to the runner system (channels in the mold tooling that the molten plastic flows through on its way to the part cavity(ies)) and gate locations may be configured based on clearing features in the mold tooling such as movable cores and fasteners, as well as keeping runner lengths to a minimum to minimize waste, such that knit lines may be formed at locations on the pipe fittings that may be more likely to be subjected to relatively higher stresses. Although increasing the wall thickness of the pipe fitting can increase the strength of the pipe fitting, this can also increase material usage as well as cycles times for the molding process (which can, for example, increase significantly as cooling times can increase quadratically as a function of wall thickness).

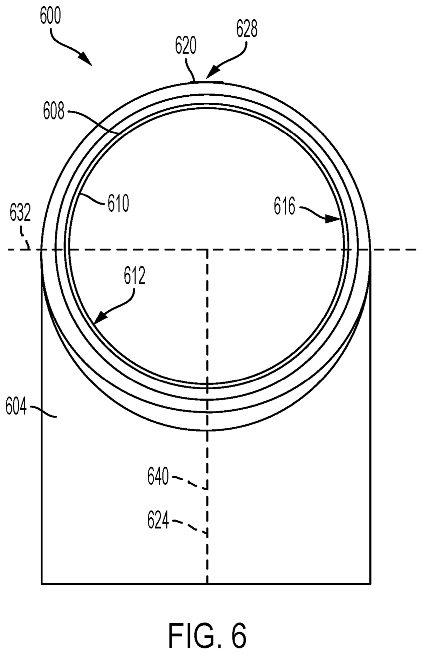

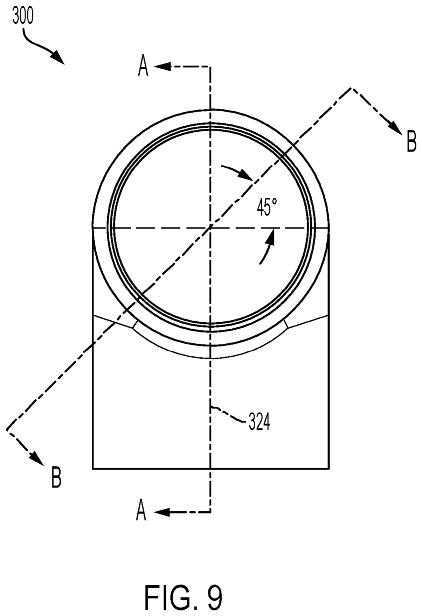

Pipe fittings in accordance with the present application, including the pipe fitting 116 as well as pipe fitting 300 described with reference to FIGS. 3-5, pipe fitting 600 described with reference to FIGS. 6-8, and pipe fitting 700 described with reference to FIGS. 9-11, can be manufactured so that knit lines are formed at target locations of the pipe fittings expected to have relatively lesser stresses due to fluid pressure applied to the pipe fittings, allowing for at least one of relatively lesser material usage (e.g., wall thickness) given a target pressure rating or increased pressure rating given a target wall thickness. For example, the gate(s) can be positioned at locations so that the knit lines are formed at the target locations, such as by being positioned on an opposite side of a core of the mold tooling from the target locations for the knit lines. Localized thickening of the knit line can be performed to increase the strength of the pipe fitting at the knit line without requiring the entire pipe fitting to have an increased thickness. Various such pipe fittings can be formed as, for example, elbows (e.g., 22.5 degree elbows, 45 degree elbows, 90 degree elbows), tees, or crosses.

FIGS. 3-5 depict an example of a pipe fitting 300. The pipe fitting 300 can incorporate features of the pipe fitting 116 described with reference to FIGS. 1 and 2. The pipe fitting 300 can be made using injection molding. For example, the pipe fitting 300 can be made from injection molding of plastic materials, such as polymers, thermoplastics, CPVC, fiber-reinforced polymers, glass-reinforced polymers, or various combinations thereof. The pipe fitting 300 can be made by injecting the plastic material through one or more gates into a mold having one or more cores, such that the plastic material flows around then one or more cores to fill the mold, and temperature (or other conditions) in the mold can be controlled (e.g., cooled) to cause the plastic material to set. As depicted in FIGS. 3-5, the pipe fitting 300 can be made as a 90 degree elbow.

The pipe fitting 300 can include a body 304. The body 304 can be a wall defining a shape or geometry of the pipe fitting 300. For example, the body 304 can form various structures of the pipe fitting 300, including a plurality of openings 308, as well as portions or sections of the pipe fitting 300 in between the openings 308 defining pathways for fluid to flow through pipe fitting 300 and for connecting with remote components, such as piping, adapters, sprinklers, and various combinations thereof. The openings 308 can be connected with pipes (e.g., pipes 108 described with reference to FIG. 1) to allow for fluid flow into the pipe fitting 300.

The body 304 can define at least one channel 312 through which fluid can be received and can flow between the openings 308 (e.g., between sockets 310 inward from the openings 308). For example, the body 304 can include at least one inner surface 316 facing the channels 312. The body 304 can have pressure applied from the fluid in the channels 312 against the inner surfaces 316 and the body 304, applying stresses on the body 304 (e.g., on the structure of the material forming the body 304). Due to the geometry of the body 304, the stresses on the body 304 may not be uniform with respect to location.

The body 304 can define at least one gate feature 320. The gate feature 320 can correspond to a location of a respective gate through which material was injected into the mold used to form the body 304. For example, the gate feature 320 can be a portion of the body 304 closest to where the respective gate was located. The gate feature 320 can be structurally different than an adjacent portion of the body 304, such as by extending away from the surface of the body 304 (such material can be removed from the body 304).

The body 304 can have at least one knit line 324. The knit line 324 can be a portion of the body 304 formed at an intersection of a plurality of flow fronts of the material used to form the body 304. The knit line 324 can be a visible feature, such as a feature appearing to be oriented or shaded differently than adjoining portions of the body 304. The knit line 324 may not be visible upon visual inspection, yet still formed at the intersection of flow fronts. The knit line 324 can be located on an opposite side of the body 304 from the gate through which the material was provided and flowed as the flow fronts (e.g., from the gate feature 320), such as a location furthest from the gate along an outer surface 302 of the body 304.

As depicted in FIGS. 3-5, the pipe fitting 300 can be an elbow. Due to the shape of the pipe fitting 300, one or more portions of the body 304 can be expected to have relatively lower stresses applied by fluid in the channel 312 (e.g., from static pressure of fluid in the channel 312 and/or from fluid flow). For example, for the elbow shape, the portion between the openings 308 along a shorter or shortest path between the openings 308 can be expected to have relatively lower stresses applied. As such, the gate can be positioned at a location adjacent to point 328, so that the knit line 324 is formed at the location of relatively lower stress. For example, the pipe fitting 300 can define a first length 332 along the body 304 between the openings 308 (e.g., a first opening 308 to a second opening 308) and a second length 336 along the body 304 between the openings 308. The first length 332 can be greater than the second length 336. The gate (e.g., gate feature 320 and point 328) can be located on the first length 332, and the knit line 324 can be located on the second length 336. The sockets 310 can define axes 340, 344 extending longitudinally from the openings 308 through the sockets 310 such that a plane 348 can be defined in which the axis 344 lies and to which the axis 340 is perpendicular, such that the first length 332 is on a side of the plane 348 that includes a portion of the one of the sockets 310, and the second length 336 is on an opposite side of the plane 348 that includes a portion of the of the sockets 310 and includes the other socket 310.

FIGS. 6-8 depict an example of a pipe fitting 600. The pipe fitting 600 can incorporate features of the pipe fittings 116, 300 described herein. The pipe fitting 600 can be a tee fitting.

The pipe fitting 600 can have a body 604, which can be a wall defining a shape or geometry of the pipe fitting 600. The body 604 can form a plurality of openings 608. For example, as depicted in FIGS. 6-8, the openings 608 can include two openings 608 opposed to each other (e.g., along a straight portion of the tee) and a third opening angled relative to the two openings 608 (e.g., approximately perpendicular to a line between the other two openings 608). Sockets 610 can be provided inward of the openings 608, along with an inner surface 616 of the body 604 defining channels 612. Due to the shape of the pipe fitting 600, stresses applied by fluid in the channels 612 may not be uniform with respect to location.

As depicted in FIGS. 6-8, the pipe fitting 600 can define at least one gate feature 620. The gate feature 620 of the pipe fitting 600 can be located at an intersection of the body 604 with an axis 640 of the opening 608 (e.g., the axis extending longitudinally through the opening 608 that is angled with respect to each of the other two openings 608). As such, the body 604 can be formed to include at least one knit line 624 opposite the at least one gate feature 620 (or a gate located adjacent to point 628 where the at least one gate feature 620 can be formed). For example, the knit lines 624 can be formed along the body 604 between adjacent openings 608, on an opposite side of a plane 632 (in which the axis 644 lines and perpendicular to the axis 640) from the point 628.

Various pipe fittings in accordance with the present disclosure can be formed such that the bodies of the pipe fittings are thicker along the knit lines relative to other portions of the pipe fittings, which can allow for the relatively lower strength of the knit lines to be overcome without significantly increasing manufacturing cycle times. For example, molding can be provided to allow for additional material to be formed along the knit line, such that the knit line can have a thickness greater than at least an adjacent portion of the pipe fitting. For example, material can be provided so that the thickness of the knit line is up to five percent, up to ten percent, up to fifteen percent, or up to twenty percent greater than at least an adjacent portion of the pipe fitting (if not the remainder of the pipe fitting). The increase in thickness of the knit line can be selected based on a relative strength of the knit line as compared with other portions of the pipe fitting; for example, where the strength of the knit line is a fraction of the strength of other portions of the pipe fitting (e.g., 90 percent), then the thickness of the knit line can be made to be an inverse of the fraction (e.g., 111 percent), such as being within a threshold of the inverse (e.g., within 10 percent of the inverse). The wall thickness can be made greater by expanding the wall outward (e.g., retaining a same inner diameter through the socket 310), such as by molding a localized bulge around the knit line.

FIGS. 9-11 depict an example of the pipe fitting 300 in which the knit line 324 has a first thickness 900 greater than a second thickness 904 of the pipe fitting 300. The second thickness 904 can be defined at a point diametrically opposed from the first thickness 900 and the knit line 324. In the example of FIGS. 9-11 in which the second thickness 904 of the wall (e.g., of body 304) of the pipe fitting 300 is 0.107 inches, the first thickness 900 of the wall corresponding to the knit line 324 can be 0.119 inches (e.g., about 111 percent of the second thickness 904).

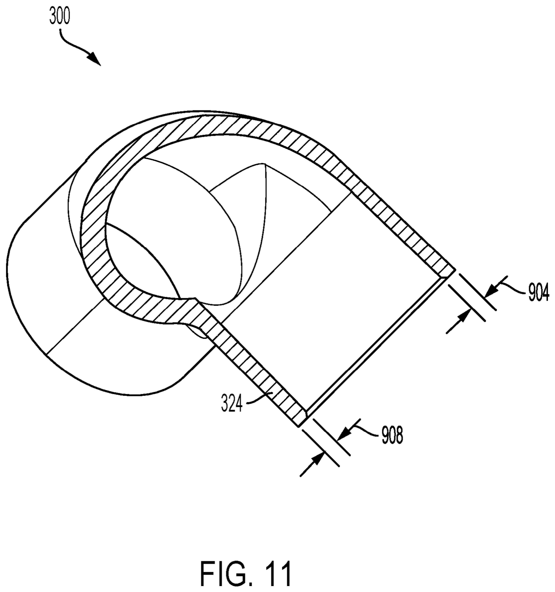

As depicted in FIG. 11, the pipe fitting 300 can be formed to have the greater first thickness 900 using a mold shaped so that the thickness of the pipe fitting 300 gradually increases from the second thickness 904 to the first thickness 900. For example, the pipe fitting 300 can have a third thickness 908 of 0.116 inches so that the third thickness 908 is greater than the second thickness 904 and less than the first thickness 900.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. Further relative parallel, perpendicular, vertical or other positioning or orientation descriptions include variations within +/-10% or +/-10 degrees of pure vertical, parallel or perpendicular positioning. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description, and changes that come within the meaning and range of equivalency of the claims are embraced therein.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

According to an embodiment, a fire protection system may be provided, comprising:
a pipe fitting to couple with a pipe downstream of a fluid source, the pipe fitting comprising:
a wall defining an opening, the wall having an outer diameter, a first wall thickness at the opening, and a second wall thickness inward from the opening, the second wall thickness greater than the first wall thickness; and
at least one sprinkler coupled with the pipe and the pipe fitting to receive fluid from the fluid source through the pipe and the pipe fitting.

According to an embodiment, the fire protection system may comprise:
the pipe fitting is made from a plastic material.

According to an embodiment, the fire protection system may comprise:
the pipe fitting is made from Chlorinated Poly (Vinyl Chloride) (CPVC).

According to an embodiment, the fire protection system may comprise:
the pipe fitting includes at least one of a tee, a reducing tee, an elbow, a reducing elbow, a coupling, a reducing coupling, a cap, a cross, a reducing cross, a bushing, a reducing bushing, a grooved coupling adapter, a threaded adapter, and a sprinkler head adapter.

According to an embodiment, the fire protection system may comprise:
the pipe is a standard thermoplastic pipe dimension ratio pipe (SDR) 13.5.

According to an embodiment, the fire protection system may comprise:
the first wall thickness is greater than or equal to 0.078 inches and less than or equal to 0.259 inches, and the second wall thickness is 125 percent of the first wall thickness.

According to an embodiment, the fire protection system may comprise:
the pipe fitting is an elbow fitting defining an extension at an elbow point of the pipe fitting.

According to an embodiment, the fire protection system may comprise:
the pipe fitting and the pipe are sized to withstand a burst pressure of 1000 psi.

According to an embodiment, the fire protection system may comprise:
the second wall thickness extends inward from the first wall thickness to define a pass-through section of the pipe fitting.

According to an embodiment, the fire protection system may comprise:
a pressure drop through the pipe fitting as a function of effective hydraulic length is less than that of a Schedule 40 or Schedule 80 pipe fitting for use with a same size pipe as the pipe fitting.

According to an embodiment, a pipe fitting of a fire protection system may be provided, comprising:
a wall defining an opening, the wall having an outer diameter, a first wall thickness at the opening, and a second wall thickness inward from the opening, the second wall thickness greater than the first wall thickness.

According to an embodiment, the pipe fitting may comprise:
the pipe fitting is made from a plastic material.

According to an embodiment, the pipe fitting may comprise:
the pipe fitting is made from Chlorinated Poly (Vinyl Chloride) (CPVC).

According to an embodiment, the pipe fitting may comprise:
at least one of a tee, a reducing tee, an elbow, a reducing elbow, a coupling, a reducing coupling, a cap, a cross, a reducing cross, a bushing, a reducing bushing, a grooved coupling adapter, a threaded adapter, and a sprinkler head adapter.

According to an embodiment, the pipe fitting may comprise:
the pipe fitting is sized to standard thermoplastic pipe dimension ratio pipe (SDR) 13.5.

According to an embodiment the pipe fitting may comprise:
the first wall thickness is greater than or equal to 0.078 inches and less than or equal to 0.259 inches, and the second wall thickness is 125 percent of the first wall thickness.

According to an embodiment, the pipe fitting may comprise:
the pipe fitting is an elbow fitting defining an extension at an elbow point of the pipe fitting.

According to an embodiment, the pipe fitting may comprise:
the pipe fitting is sized to withstand a burst pressure of 1000 psi.

According to an embodiment, the pipe fitting may comprise:
the second wall thickness extends inward from the first wall thickness to define a pass-through section of the pipe fitting.

According to an embodiment, the pipe fitting may comprise:
a pressure drop through the pipe fitting is less than that of a Schedule 40 or Schedule 80 pipe fitting for use with a same size pipe as the pipe fitting.

According to an embodiment, a pipe fitting may be provided that comprises:
a wall made from a plastic material, the wall defining a first opening and a second opening spaced from the first opening to form at least one channel between the first opening and the second opening, the wall comprising a knit line extending from the first opening to the second opening.

According to an embodiment, the pipe fitting may comprise:
the knit line coincides with a first portion of the wall expected to subjected to a relatively lower stress due to pressure from fluid in the channel compared with a second portion of the wall spaced from the first portion.

According to an embodiment, the pipe fitting may comprise:
a gate feature defined on the wall, the gate feature opposite the knit line.

According to an embodiment, the pipe fitting may comprise:
the knit line has a first thickness greater than a second thickness of a portion of the wall away from the knit line.

According to an embodiment, the pipe fitting may comprise:
the pipe fitting comprises at least one of a coupling, an elbow, a tee, or a cross.

According to an embodiment, the pipe fitting of claim 21 may comprise:
the pipe fitting comprises an elbow defining a first length along the wall from the first opening to the second opening and a second length along the wall from the first opening to the second opening, the first length greater than the second length and opposed from the second length; and
the knit line extends along the second length.

According to an embodiment, the pipe fitting may comprise:
the first opening defines a first axis, the second opening defines a second axis, the pipe fitting comprises a tee orienting the first axis at an angle to the second axis, the knit line is on a same side of the pipe fitting as the second opening relative to a plane that includes the first axis and is perpendicular to the second axis.

According to an embodiment, the pipe fitting may comprise:
the plastic material includes a fiber.

According to an embodiment, the pipe fitting may comprise:
the plastic material includes CPVC.

According to an embodiment, the pipe fitting may comprise:
a first socket associated with the first opening; and
a second socket associated with the second opening, the knit line is located at an intersection of the first socket and the second socket.

According to an embodiment, the pipe fitting may comprise:
the knit line is located along the wall at a location to be adjacent to a pipe connected with the first opening.

According to an embodiment, the pipe fitting may comprise:
a plurality of openings; and
a knit line formed by injection molding and extending from a first opening of the plurality of openings to a second opening of the plurality of openings, the knit line at least one of (i) thicker than an adjacent portion of the pipe fitting and (ii) at a first location on the pipe fitting expected to subjected to a relatively lower stress due to pressure from fluid in the pipe fitting compared with a second location on the pipe fitting spaced from the first location.

According to an embodiment, the pipe fitting may comprise:
a gate feature defined on a wall between the plurality of openings, the gate feature opposite the knit line.

According to an embodiment, the pipe fitting may comprise:
the knit line has a first thickness greater than a second thickness of the pipe fitting away from the knit line.

According to an embodiment, the pipe fitting may comprise:
the pipe fitting comprises at least one of a coupling, an elbow, a tee, or a cross.

According to an embodiment, the pipe fitting may comprise:
the pipe fitting comprises an elbow defining a first length from the first opening to the second opening and a second length from the first opening to the second opening, the first length greater than the second length and opposed from the second length; and
the knit line extends along the second length.

According to an embodiment, the pipe fitting may comprise:
the first opening defines a first axis, the second opening defines a second axis, the pipe fitting comprises a tee orienting the first axis at an angle to the second axis, the knit line is on a same side of the pipe fitting as the second opening relative to a plane that includes the first axis and is perpendicular to the second axis.

According to an embodiment, the pipe fitting may comprise:
the pipe fitting comprises CPVC.

According to an embodiment, the pipe fitting may comprise:
a first socket associated with the first opening; and
a second socket associated with the second opening, the knit line is located at an intersection of the first socket and the second socket.

According to an embodiment, a fire protection system may comprise:
one or more pipes; and
a pipe fitting coupled with the one or more pipes between a fluid source and at least one sprinkler, the pipe fitting comprising a wall made from a plastic material, the wall defining a first opening and a second opening spaced from the first opening to form at least one channel between the first opening and the second opening, the wall comprising a knit line extending from the first opening to the second opening.

## Claims

1. A pipe fitting (116) for a fire protection system, wherein the pipe fitting is made from a plastic material, the pipe fitting comprising
a wall (204) defining an opening (212), the wall having an outer diameter, a first wall thickness (208) at the opening, and a second wall thickness (220) inward from the opening, the second wall thickness greater than the first wall thickness; wherein the wall (204) comprises a knit line (324, 624), and wherein the knit line coincides with a first portion of the wall expected to be subjected to a relatively lower stress due to pressure compared with a second portion of the wall spaced from the first portion.

2. The pipe fitting (116) of claim 1, wherein the pipe fitting is made from Chlorinated Poly (Vinyl Chloride) (CPVC).

3. The pipe fitting (116) of claim 1 or 2 comprising
at least one of a tee, a reducing tee, an elbow, a reducing elbow, a coupling, a reducing coupling, a cap, a cross, a reducing cross, a bushing, a reducing bushing, a grooved coupling adapter, a threaded adapter, and a sprinkler head adapter.

4. The pipe fitting (116) of any of the preceding claims, wherein the pipe fitting is sized to standard thermoplastic pipe dimension ratio pipe (SDR) 13.5.

5. The pipe fitting (116) of any of the preceding claims, wherein the first wall thickness (208) is greater than or equal to 1,98 mm and less than or equal to 6,58 mm, and the second wall thickness (220) is 125 percent of the first wall thickness.

6. The pipe fitting (116) of any of the preceding claims, wherein the pipe fitting is an elbow fitting defining an extension (224) at an elbow point (232) of the pipe fitting.

7. The pipe fitting (116) of any of the preceding claims, wherein the pipe fitting is sized to withstand a burst pressure of 6,895 MPa.

8. The pipe fitting (116) of any of the preceding claims, wherein the second wall thickness (220) extends inward from the first wall thickness (208) to define a pass-through section (206) of the pipe fitting.

9. The pipe fitting (116) of any of the preceding claims, wherein a pressure drop through the pipe fitting is less than that of a Schedule 40 or Schedule 80 pipe fitting for use with a same size pipe (108) as the pipe fitting.

10. A fire protection system, comprising:
- a pipe fitting (116) according to claim 1 to couple with a pipe (108) downstream of a fluid source; and
- at least one sprinkler (132) coupled with the pipe (108) and the pipe fitting (116) to receive fluid -from the fluid source through the pipe and the pipe fitting.

11. The fire protection system of claim 10, wherein the pipe fitting (116) is made from Chlorinated Poly (Vinyl Chloride) (CPVC).

12. The fire protection system of claim 10 or 11, wherein the pipe fitting (116) includes at least one of a tee, a reducing tee, an elbow, a reducing elbow, a coupling, a reducing coupling, a cap, a cross, a reducing cross, a bushing, a reducing bushing, a grooved coupling adapter, a threaded adapter, and a sprinkler head adapter.

13. The fire protection system of any of claims 10 to 12, wherein the pipe (108) is a standard thermoplastic pipe dimension ratio pipe (SDR) 13.5.

14. The fire protection system of any of claims 10 to 13, wherein the first wall thickness (208) is greater than or equal to 1,98 mm and less than or equal to 6,58 mm, and the second wall thickness (220) is 125 percent of the first wall thickness.

15. The fire protection system of any of claims 10 to 14, wherein
- the pipe fitting (116) is an elbow fitting defining an extension (224) at an elbow point (232) of the pipe fitting;
and/or
- the pipe fitting (116) and the pipe (108) are sized to withstand a burst pressure of 6,895 MPa;
and/or
- the second wall thickness (220) extends inward from the first wall thickness (208) to define a pass-through section (206) of the pipe fitting (116);
and/or
- a pressure drop through the pipe fitting (116) as a function of effective hydraulic length is less than that of a Schedule 40 or Schedule 80 pipe fitting for use with a same size pipe (108) as the pipe fitting.
